# FASCICULE DE BREVET EUROPEEN

(11) **EP 3 941 888 B1**
(45) Date de publication et mention de la délivrance du brevet: **06.05.2026**
(21) Numéro de dépôt: 20726216.3
(22) Date de dépôt: 16.03.2020
(51) Int. Cl.: C04B 28/26

(54) **LIANT GEOPOLYMERIQUE A BASE D'ARGILE TOT CHARGEE**
GEOPOLYMERBINDEMITTEL AUF BASIS VON GELADENEM TOT-TON
GEOPOLYMER BINDER BASED ON CHARGED TOT CLAY

(30) Priorité: 21.03.2019 FR 1902917
(43) Date de publication de la demande: 26.01.2022
(73) Titulaire: Université Gustave Eiffel, 77454 Marne-la-Vallée Cedex 2 (FR)
(72) Inventeur: LUZU, Baptiste, 77340 PONTAULT-COMBAULT (FR); DJERBI, Assia, 94120 FONTENAY-SOUS-BOIS (FR); DUC, Myriam, 77580 VOULANGIS (FR); GAUTRON, Laurent, 77340 PONTAULT-COMBAULT (FR)
(74) Mandataire: Cabinet Beau de Loménie
(86) Numéro de dépôt international: PCT/FR2020/050563
(87) Numéro de publication internationale: WO 2020/188214

(56) Documents cités:
- US-A1- 2012 156 381
- MACKENZIE ET AL: "Formation of inorganic polymers (geopolymers) from 2:1 layer lattice aluminosilicates", JOURNAL OF THE EUROPEAN CERAMIC SOCIETY, ELSEVIER SCIENCE PUBLISHERS, BARKING, ESSEX, GB, vol. 28, no. 1, 26 October 2007 (2007-10-26), pages 177 - 181, XP022316940, ISSN: 0955-2219, DOI: 10.1016/J.JEURCERAMSOC.2007.06.004
- ALASTAIR MARSH ET AL: "Alkali activation behaviour of un-calcined montmorillonite and illite clay minerals", APPLIED CLAY SCIENCE, vol. 166, 1 December 2018 (2018-12-01), AMSTERDAM, NL, pages 250 - 261, XP055652382, ISSN: 0169-1317, DOI: 10.1016/j.clay.2018.09.011

## Description

### Domaine Technique

La présente invention relève du domaine des matériaux de construction. Plus précisément, l'invention concerne un liant géopolymérique à base d'argile dite « TOT » chargée. Ce liant permet la fabrication de coulis, mortier et béton avec une faible empreinte environnementale.

### Etat de la technique

Dans le domaine de la construction, trois types de liants sont généralement utilisés, les liants hydrauliques à base de ciment Portland, les liants alcali-activés et les liants géopolymériques. Les liants géopolymériques, ou géopolymères, sont appelés de cette manière car ils sont obtenus par polymérisation de matière inorganique, tels que des oxydes d'aluminosilicates, en présence d'activateur alcalin. Les géopolymères possèdent une structure tridimensionnelle très résistante constituée de liaisons covalentes Si-O-Si et Si-O-Al.

La production des géopolymères est écologiquement plus avantageuse que celle du ciment Portland conventionnel. En effet, produire une tonne de ciment Portland implique la calcination de calcaire et d'argile à 1450°C. Cette calcination du calcaire entraîne l'émission d'environ une tonne de CO₂ en plus du coût énergétique élevé de l'activation thermique.

En comparaison, le coût énergétique de la préparation des matériaux précurseurs d'un géopolymère conventionnel, à savoir des métakaolins, ne représente qu'un tiers de celui du ciment Portland. En effet un métakaolin est obtenu par broyage de kaolin suivi d'un passage de quelques secondes dans une chambre à une température comprise entre 900 et 1000°C. Un tel métakaolin présente en général une granulométrie inférieure à 10 µm et donc une réactivité importante (du fait de sa grande surface spécifique). Toutefois la préparation d'un liant géopolymérique à partir de métakaolin nécessite une quantité importante d'activateur alcalin, typiquement une solution alcaline de silicate, pour que le liant puisse être mis en œuvre et possède donc une certaine ouvrabilité. Le coût de production d'un liant géopolymérique à base de métakaolin peut s'avérer élevé (compte tenu de la quantité nécessaire et du prix des solutions alcalines d'activation). En outre, lorsque des solutions alcalines de silicate corrosives sont utilisées (c.à.d. lorsque le rapport molaire M₂O:SiO₂ > 0,625 avec M = Na ou K), la présence de personnel qualifié est nécessaire pour éviter tout accident lors de la manipulation de ces substances.

La préparation de géopolymères à partir de métakaolin est décrite notamment dans les demandes de brevet US 2012/0192765, WO 2016/156722, WO 2008/012438 et FR-A-2966823. Des travaux sur les géopolymères sont également documentés dans la littérature. Ainsi, Buchwald et al. ( The suitability of thermally activated illite/smectite clay as raw material for geopolymer binders. Applied Clay Science, 46 (2009) 300-304) ont étudié l'aptitude d'argile à base d'illite/smectite à être utilisée comme précurseur d'un géopolymère. Le précurseur a été préalablement activé thermiquement à 850°C. Une solution silicatée composée à 10% de NaOH a été mélangée à l'illite calcinée avec un rapport L/S (liquide/solide) égal à 0,41. Grase et al. (Chemically treated submicron illite clays for product with improved strength. Advanced Materials Research, 1117 (2015) 152-155) ont synthétisé des géopolymères à base d'illite issue d'argile rouge et grise. Cette illite a été mélangée à une solution de NaOH (4M) puis curée 3 jours à 60°C puis 3 jours à 100°C. Dietel et al. ( The importance of specific surface area in the geopolymerisation of heated illitic clay. Applied Clay Science, 139 (2017) 99-107) ont synthétisé un géopolymère dont le précurseur est de l'argile composée à 30% d'illite. L'argile a été calcinée à 875°C pendant 3h puis mélangée à une solution de KOH (5M) avec un rapport L/S égal à 0,5. Hu et al. ( The influence of alkali activator type, curing temperature and gibbsite on the géopolymérisation of an interstratified illite-smectite rich clay from Friedland. Applied Clay Science, 135 (2017) 386-393) ont étudié l'influence de plusieurs activateurs alcalins sur la géopolymérisation d'argile riche en illite-smectite. Cette argile a été calcinée à 850°C puis broyée pendant 2h avec un broyeur planétaire à billes d'agate. Plusieurs proportions de gibbsite Al(OH)₃ ont été mélangées au précurseur, et les géopolymères ont été obtenus en ajoutant NaOH 6M ou KOH 6M avec un rapport massique liquide/solide (L/S) égal à 0,5. Les performances mécaniques de ces géopolymères à base d'illite sont toutefois moyennes, avec par exemple une résistance à la compression à 28 jours de l'ordre de 30 MPa (Hu et al., op. cité). MacKenzie et al. (Formation of inorganic polymers (geopolymers) from 2:1 layer lattice aluminosilicates. Journal of the European Ceramic Society, 2007, 28(1), 177-181) décrivent la formation de géopolymères à partir de pyrophyllite en présence d'une solution de silicate de sodium. D'après la partie expérimentale, la pyrophyllite est broyée puis mélangée à une solution de silicate de sodium dont le rapport molaire Na₂O/SiO₂ est de 0,37. Le rapport liquide/solide de ce mélange est égal à 2. Par ailleurs, aucune donnée concrète ne vient illustrer les propriétés mécaniques des géopolymères obtenus.

Dans l'optique de disposer de géopolymères dont le coût de revient est maitrisé et dont les performances mécaniques permettent leur application dans différents domaines comme les éléments préfabriqués et les revêtements de protection, la présente invention a été réalisée.

### Résumé de l'invention

L'invention concerne un liant géopolymérique dans lequel tout ou partie du métakaolin traditionnellement utilisé pour la préparation de géopolymères est remplacé par une argile TOT chargée activée. Plus particulièrement l'invention concerne un liant géopolymérique comprenant : un matériau aluminosilicaté contenant au moins 20% en masse d'argile TOT chargée, et une solution alcaline de silicate ayant un rapport molaire M₂O/SiO₂ (M = Na ou K) compris dans la gamme allant d'environ 0,45 à environ 0,8, ledit liant géopolymérique présentant un rapport massique liquide/solide (L/S) compris dans la gamme allant d'environ 0,4 à environ 1,0 (0,4 ≤ L/S ≤ 1,0).

L'invention concerne également un mortier ou un béton obtenu à partir du liant géopolymérique ci-dessus.

L'invention concerne en outre un procédé de préparation d'un précurseur de liant géopolymère qui comprend une étape d'activation mécanique d'argile TOT chargée, cette étape étant éventuellement précédée d'une étape d'activation thermique de ladite argile.

### Brève description de la figure

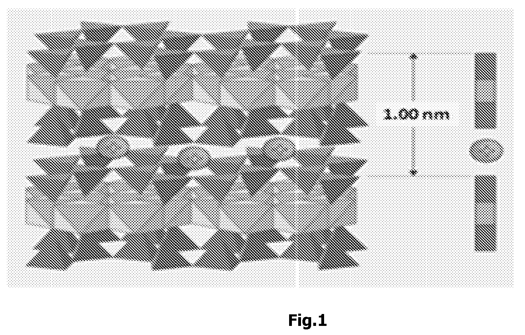

La figure 1 représente la structure d'une argile TOT chargée.

### Description de l'invention

Selon un aspect, l'invention concerne un liant géopolymérique comprenant : un matériau aluminosilicaté contenant au moins 20% en masse d'argile TOT chargée activée, et une solution alcaline de silicate ayant un rapport molaire M₂O/SiO₂ (M = Na ou K) compris dans la gamme allant d'environ 0,45 à environ 0,8, ledit liant géopolymérique présentant un rapport massique liquide/solide compris dans la gamme allant d'environ 0,40 à environ 1,0.

On entend par « argile TOT chargée activée » une argile TOT chargée dont le taux de phase amorphe est d'au moins 20% en masse, avantageusement d'au moins 30% en masse, par exemple au moins 40% en masse ou au moins 50% en masse, et très avantageusement d'au moins 70% en masse, par exemple au moins 80% en masse ou au moins 90% en masse.

Les argiles TOT chargées sont des argiles ayant une structure composée d'un feuillet octaédrique alumineux noté O entre deux feuillets siliceux tétraédriques notés T (cf. figure 1). On les nomme aussi argiles 2:1. Parmi ces argiles, les argiles TOT chargées sont des argiles dont la charge est compensée par des cations (Cⁿ⁺) et dont la quantité est élevée entre 0,6 et 2 mole par demi-maille. Elles forment la classe des micas.

Les argiles TOT chargées peuvent provenir d'une formation géologique naturelle, comme par exemple l'argile verte de Romainville ou bien la marne bleue d'Argenteuil, toutes deux issues de formations géologiques du bassin parisien. Il est également possible d'utiliser des argiles TOT chargées, par exemple des argiles vertes disponibles dans le commerce. De manière avantageuse, l'argile TOT chargée est choisie parmi les minéraux argileux de type illite, muscovite, smectite (dont fait partie la montmorillonite), vermiculite ou les mélanges de ces minéraux argileux. De manière tout à fait avantageuse, l'argile TOT chargée comprend au moins 10% en masse d'un des minéraux argileux cités précédemment, par exemple au moins 20% en masse, au moins 30% en masse, au moins 40% en masse, au moins 50% en masse, au moins 60% en masse, au moins 70% en masse.

Le matériau aluminosilicaté comprend au moins 20% en masse, avantageusement au moins 30% en masse, au moins 40% en masse ou au moins 50% en masse, encore plus avantageusement au moins 70% en masse d'argile TOT chargée activée. De manière très avantageuse, le matériau aluminosilicaté est constitué uniquement d'argile TOT chargée activée.

On comprend de ce qui précède que le matériau aluminosilicaté peut ne pas être constitué exclusivement d'argile TOT chargée activée. Dans ce cas de figure, le matériau aluminosilicaté peut également comprendre au moins un composé choisi parmi du quartz, un carbonate, un feldspath, un métakaolin, et un aluminosilicate non activé thermiquement. Dans le cadre de la présente invention, l'expression « au moins un composé choisi parmi » englobe non seulement un composé pris individuellement (par exemple du quartz) mais également un mélange de plusieurs composés du même type (par exemple plusieurs carbonates ou plusieurs métakaolins), ainsi qu'un mélange d'un ou plusieurs composé(s) d'un premier type avec une ou plusieurs composé(s) d'un ou plusieurs autres types (par exemple un mélange de métakaolin(s) et d'aluminosilicate(s) non activé(s) thermiquement). Dans un mode de réalisation, l'aluminosilicate non activé thermiquement est choisi parmi du kaolin, de la bentonite, des cendres volantes, du laitier de haut fourneau, ou un mélange de ces composés. Dans un autre mode de réalisation, le carbonate est choisi parmi la calcite et / ou la dolomite. Il est souhaitable, lorsque le matériau aluminosilicaté comprend un métakaolin et / ou un aluminosilicate non activé thermiquement, que ces matériaux ne représentent pas plus de 50% en masse de la masse du matériau aluminosilicaté.

Le liant géopolymérique comprend également une solution alcaline de silicate ayant un rapport molaire M₂O/SiO₂ (M = Na ou K) compris dans la gamme allant d'environ 0,45 à environ 0,80. De manière avantageuse, le rapport molaire M₂O:SiO₂ est compris dans la gamme allant d'environ 0,5 à environ 0,67, de préférence dans la gamme allant d'environ 0,50 à < 0,625, et de préférence encore dans la gamme allant d'environ 0,53 à environ 0,59. Une telle solution de silicate est soit directement disponible dans le commerce (par exemple auprès des sociétés VWR ou Woellner GmbH), soit obtenue à partir d'une solution précurseur (commerciale ou non) ayant un rapport molaire M₂O/SiO₂ en dehors de la gamme de valeurs précitée, rapport molaire qui est subséquemment ajusté à la valeur désirée avec une quantité appropriée d'hydroxyde alcalin MOH (sous forme par exemple de pastilles ou de poudre). Dans ce dernier cas de figure (ajustement du rapport molaire M₂O/SiO₂), l'ajout de l'hydroxyde alcalin peut intervenir avant ou après le mélange de la solution alcaline de silicate et du matériau aluminosilicaté.

Les proportions respectives de matériau aluminosilicaté et de solution alcaline de silicate sont telles que le liant présente un rapport massique liquide/solide (L/S) compris dans la gamme allant d'environ 0,4 à environ 1,0 (0,4 ≤ L/S ≤ 1,0), avantageusement dans la gamme allant d'environ 0,5 à environ 0,8 (0,5 ≤ L/S ≤ 0,8), de façon tout à fait avantageuse dans la gamme allant d'environ 0,5 à environ 0,75 (0,5 ≤ L/S ≤ 0,75). Ce rapport massique liquide/solide permet de contrôler la quantité de solution alcaline dans le liant géopolymérique, afin de promouvoir une géopolymérisation optimale, et une porosité contrôlée lors du durcissement du mortier ou béton susceptible d'être fabriqué à partir dudit liant géopolymérique.

Dans un mode de réalisation le liant géopolymérique est exempt d'additifs, et notamment de superplastifiant de type acide carboxylique réticulé (tel qu'un homopolymère d'acide acrylique réticulé en particulier un homopolymère d'acide acrylique réticulé avec des éthers polyalkényle ou du divinyle glycol), ou bien encore exempt de source d'ions cuivre.

Selon un autre aspect, l'invention concerne un mortier ou un béton comprenant le liant géopolymère défini ci-dessus. De manière conventionnelle, le mortier est obtenu en mélangeant du sable au liant géopolymère, et le béton est obtenu en mélangeant du sable et des granulats au liant géopolymère. Le mortier ou le béton peut éventuellement comprendre des fibres de renfort, d'origine métallique, organique ou minérale ; les fibres organiques sont d'origine naturelle (chanvre, lin ou bambou par exemple) ou synthétique. Selon un autre aspect, l'invention concerne un procédé de préparation d'une argile TOT chargée activée, utile comme précurseur d'un liant géopolymérique.

Habituellement, les argiles de type kaolinite, dont les feuillets présentent une structure TO c'est-à-dire une couche tétraédrique siliceuse liée à une couche octaédrique alumineuse, sont activées par un traitement thermique. Ce traitement entraine la déshydratation de ces argiles au niveau cristallin : les groupements OH liés à la couche octaédrique quittent les feuillets après une cuisson de quelques heures à partir de 500°C (jusqu'à 850°C). En revanche, comme le montre la figure 1, la configuration des feuillets des argiles TOT est plus complexe. Cette configuration ne permet pas une déshydroxylation facile des feuillets qui nécessite une activation thermique d'au moins plusieurs heures à 850°C. L'argile activée thermiquement ne présente pas nécessairement un niveau d'amorphisation suffisant pour permettre une géopolymérisation optimale lorsque l'argile est mélangée avec une solution alcaline de silicate. La présente invention vise à remédier à ce problème, en mettant à disposition un précurseur de liant géopolymère (le matériau aluminosilicaté) comprenant une argile TOT chargée qui possède un niveau minimum d'amorphisation de 20% en masse.

Selon un aspect de l'invention, l'argile TOT chargée contenue dans le matériau aluminosilicaté est soumise à une étape d'activation mécanique. Cette étape est typiquement mise en œuvre par broyage du matériau aluminosilicaté de départ. L'homme du métier aura à l'esprit le fait que le matériau de départ (avant broyage) doit avoir une granulométrie inférieure à 1 mm ; si tel n'est pas le cas, une étape de pré-broyage du matériau est nécessaire. Tout type de broyeur est susceptible d'être utilisé pour réaliser cette étape d'activation mécanique. A titre de broyeurs convenant aux fins de l'invention, on peut citer un broyeur giratoire ou un broyeur planétaire. Ce type de broyeurs permet la fragmentation par impact, à l'aide de billes de broyage, du matériau aluminosilicaté. Ces broyeurs sont généralement utilisés avec une vitesse de rotation comprise dans la gamme allant d'environ 30 tours/min à environ 600 tours/min, pendant une durée suffisante pour que l'argile TOT chargée présente un taux de phase amorphe d'au moins 20% en masse ; une durée de broyage comprise dans la gamme allant d'environ 15 minutes à environ 6h permet généralement d'obtenir le taux de phase amorphe désiré. Il est par ailleurs souhaitable que le rapport massique entre les billes de broyage et le matériau aluminosilicaté de départ (de granulométrie inférieure à 1 mm) soit compris dans la gamme allant d'environ 3,0 à environ 20,0, avantageusement dans la gamme allant d'environ 7,0 à environ 15,0.

Lorsque le broyeur utilisé est un broyeur planétaire, celui-ci est avantageusement utilisé avec une vitesse de rotation comprise dans la gamme allant d'environ 30 tours/min à environ 600 tours/min, en particulier dans la gamme allant d'environ 400 tours/minute à environ 600 tours/min pendant une durée comprise dans la gamme allant d'environ 15 minutes à environ 6h, en particulier dans la gamme allant d'environ 2h à environ 4h. Lorsque le broyeur utilisé est un broyeur giratoire, celui-ci est avantageusement utilisé avec une vitesse de rotation comprise dans la gamme allant d'environ 30 tours/min à environ 100 tours/min, pendant une durée comprise dans la gamme allant d'environ 15 minutes à environ 6h, en particulier dans la gamme allant d'environ 2h à environ 4h. Selon un autre aspect de l'invention, l'étape d'activation mécanique de l'argile TOT chargée contenu dans le matériau aluminosilicaté de départ peut être précédée d'une étape d'activation thermique « classique », à savoir une calcination du matériau aluminosilicaté de départ (de granulométrie inférieure à 1 mm) dans une gamme de température allant d'environ 200°C à environ 1000°C, préférablement dans une gamme de température allant d'environ 800°C à environ 900°C pendant environ 2h à environ 6h. L'activation thermique se fait par exemple dans un four programmable, tel qu'un four à moufle, un four rotatif ou un four de calcination flash, en utilisant un creuset en matériau réfractaire pour contenir le matériau.

À la fin de l'étape d'activation mécanique (qu'elle ait ou non été précédée d'une étape d'activation thermique) l'argile TOT chargée contenue dans le matériau aluminosilicaté comprend au moins 20% en masse, de manière avantageuse au moins 30% en masse et de manière très avantageuse au moins 70% en masse, de phase amorphe.

La présente invention permet la substitution, partielle ou totale, du métakaolin classiquement utilisé pour la fabrication de liants géopolymériques, par un matériau aluminosilicaté à base d'argile TOT chargée activé. En effet, le métakaolin est obtenu par calcination de kaolins naturels extraits de carrière. Or les zones d'extraction de kaolins naturels sont beaucoup moins répandues que les zones riches en argile TOT chargée (notamment en France). L'invention contribue donc à économiser des ressources naturelles rares au bénéfice de ressources plus répandues voire présentes sous forme de déchets (déchet de carrière ou de terrassement).

Il est possible, en mettant en œuvre la présente invention, d'obtenir des liants géopolymériques pouvant atteindre de très hautes performances mécaniques (Rc > 120 MPa à 28j) ce qui, à la connaissance de la Demanderesse, est très rare voire impossible pour des liants géopolymériques dont le précurseur aluminosilicaté est composé exclusivement de métakaolin.

Un autre avantage réside dans le fait que la demande en eau du précurseur aluminosilicaté conforme à l'invention est nettement inférieure à celle du métakaolin flashé. L'argile TOT chargée activée réagit beaucoup moins rapidement avec la solution alcaline (durcissement plus lent), ce qui permet de diminuer drastiquement la quantité d'eau contenue dans le mélange sans avoir à utiliser d'adjuvant de type superplastifiant. La présente invention permet donc d'augmenter les propriétés mécaniques du géopolymère après cure tout en gardant une ouvrabilité acceptable lors de la mise en œuvre du liant, du mortier ou du béton avant la période de cure, que celle-ci soit faite en étuve ou à l'air ambiant. Diminuer la quantité de solution alcaline de silicate permet également de diminuer les coûts environnementaux et financiers de ce type de géopolymère car cette solution est produite industriellement et concentre la majeure partie du coût du géopolymère.

Du fait de ses propriétés rhéologiques et mécaniques, le liant géopolymère conforme à l'invention est susceptible d'être utilisé :
- pour la réalisation d'éléments de construction préfabriqués (bloc de bétons, parpaing, brique, tuiles, plaque, ou matériau d'isolation, etc.) ;
- comme matériau directement coulé sur chantier sous forme de coulis, mortier ou béton ;
- comme colle ;
- comme enrobage d'éléments de construction ou de surface, enduits ;
- pour la fabrication de céramiques (canalisations, moules réfractaires, etc.).

L'invention sera mieux comprise à l'aide des exemples suivants, donnés à titre purement illustratif. Dans ces exemples, les mesures de résistance à la compression (Rc) à 48h et 28 jours ont été effectuées selon le principe de la norme EN 12390-3. Sauf indication contraire, les solutions alcalines de silicate utilisées sont des solutions commerciales.

### Exemple 1

On a préparé un liant géopolymère à partir d'Argile Verte de Romainville issue de la couche superficielle d'une carrière de gypse de l'est francilien. Ce matériau argileux contient des argiles TOT chargées dont en moyenne 48% en masse d'illite/muscovite.

On a placé dans un creuset en alumine 500 g d'argile verte dont la granulométrie est inférieure à 1 mm, puis le creuset a été placé dans un four à moufle de type Nabertherm^{®} LE 14/11/B150. Une montée en température de 30 min du four puis un palier à une température de 850°C pendant une durée de 2h ont été programmés. Le refroidissement à température ambiante s'est fait de manière naturelle dans le four fermé. Une fois le traitement thermique terminé, le matériau a été placé dans un creuset en carbure de tungstène associé à un broyeur planétaire de type Retsch^{®} PM100 et on a ajouté des billes de 30 mm de diamètre en carbure de tungstène, de sorte à obtenir un rapport massique billes/poudre de matériau de 7,7. Le creuset a été fermé et on l'a mis en place sur l'axe de rotation du broyeur planétaire. Le broyage a été effectué pendant 4h à 400 tours/min. À la fin du broyage, la poudre obtenue comprend au moins 40% en masse de phase amorphe, et présente un D₁₀₀<100µm et une surface spécifique BET = 5 m²/g.

On a placé la poudre obtenue dans un malaxeur de type turbotest avec turbine de type défloculeuse, commercialisé par la société VMI-RAYNERI. Puis on a ajouté une solution alcaline de silicate de sodium de rapport molaire Na₂O/SiO₂ = 0,54, obtenue en mélangeant une solution industrielle de rapport molaire Na₂O/SiO₂ = 0,21 avec des pastilles de soude anhydre. Le rapport massique liquide/solide (L/S) du mélange était de 0,5. On a ensuite malaxé le tout en mode automatique à vitesse moyenne (1000 tours/min) pendant 1 à 3 minutes, puis en mode manuel pendant 30s, et de nouveau en mode automatique à vitesse rapide (1500 tours/min) pendant 1 à 3 minutes.

Le mélange obtenu a été coulé dans un moule cylindrique en plastique (diamètre 33 mm, hauteur 70 mm). On a posé le moule rempli sur une table vibrante et on l'a fait vibrer pendant 3 minutes à une fréquence rapide (2100 vibrations/min). Le moule a été soumis à une cure en étuve, selon les modalités suivantes : 24h à 40°C puis 24h à 70°C. Après 48h, la pièce préfabriquée était prête à l'emploi après démoulage.

La mesure de la résistance à la compression (Rc) à 48h et à 28 jours est reportée dans le tableau 1.

### Exemples 2 et 3

On a répété le mode opératoire de l'exemple 1 mais en utilisant respectivement un rapport massique L/S de 0,75 et 1,0. La mesure de la Rc à 48h et à 28 jours est reportée dans le tableau 1.

### Exemple 4

On a répété le mode opératoire de l'exemple 1 mais en utilisant (i) comme matériau de départ de la marne bleue d'Argenteuil (qui comprend 20% en masse d'argile TOT chargée et environ 35% en masse de carbonates - calcite et dolomite), (ii) une solution alcaline de silicate de sodium de rapport molaire Na₂O/SiO₂ = 0,59, et (iii) un rapport massique L/S de 1,0. La mesure de la Rc à 48h et à 28 jours est reportée dans le tableau 1.

### Exemple 5

On a répété le mode opératoire de l'exemple 1 mais en utilisant pour l'étape de broyage un broyeur giratoire (broyage pendant 4h à 40 tours/min) ainsi qu'une solution alcaline de silicate de sodium de rapport molaire Na₂O/SiO₂ = 0,59 et un rapport massique L/S de 0,75. La mesure de la Rc à 28 jours est reportée dans le tableau 1.

### Exemple 6

On a répété le mode opératoire de l'exemple 1 mais en utilisant pour l'étape de broyage un broyeur giratoire (broyage pendant 4h à 40 tours/min) ainsi qu'une solution alcaline de silicate de potassium de rapport molaire K₂O/SiO₂ = 0,66 et un rapport massique L/S de 0,75. La mesure de la Rc à 28 jours est reportée dans le tableau 1.

### Exemple 7

On a placé 80g de marne bleue d'Argenteuil dans un creuset en carbure de tungstène associé à un broyeur planétaire de type Retsch^{®} PM100 et on a ajouté des billes de 30 mm de diamètre en carbure de tungstène, de sorte à obtenir un rapport massique billes/poudre de matériau de 7,7. Le creuset a été fermé et on l'a mis en place sur la roue solaire du broyeur planétaire. Le broyage a été effectué pendant 4h à 400 tours/min. Séparément, on a placé dans un creuset en alumine 500 g d'argile verte de Romainville (D₁₀₀<1mm) puis le creuset a été placé dans un four à moufle de type Nabertherm^{®} LE 14/11/B150. Une montée en température de 30 min du four puis un palier à une température de 850°C pendant une durée de 2h ont été programmés. Le refroidissement à température ambiante s'est fait de manière naturelle dans le four fermé. Une fois le traitement thermique terminé, le matériau a été broyé à l'aide d'un broyeur giratoire pendant 4h à 40 tours/min.

On a ensuite préparé un mélange 80/20 (en masse) d'argile verte (activée thermiquement et mécaniquement) et de marne bleue (activée mécaniquement). Ce mélange a ensuite été additionné à une solution alcaline de silicate de sodium de rapport molaire Na₂O/SiO₂ = 0,59 selon le mode opératoire de l'exemple 1, de sorte à avoir un rapport massique L/S de 0,69. La mesure de la Rc à 48h et à 28 jours est reportée dans le tableau 1.

### Exemples 8 et 9

On a répété le mode opératoire de l'exemple 1 mais en utilisant respectivement un rapport massique billes/poudre de matériau de 11 et 15. La mesure de la Rc à 28 jours est reportée dans le tableau 1.

### Exemple 10

On a répété le mode opératoire de l'exemple 1 mais en utilisant une solution alcaline de silicate de sodium de rapport molaire Na₂O/SiO₂ = 0,59 et un rapport massique L/S de 0,75. La mesure de la Rc à 28 jours est reportée dans le tableau 1.

### Exemple 11

On a répété le mode opératoire de l'exemple 1 mais en utilisant une solution alcaline de silicate de potassium de rapport molaire K₂O/SiO₂ = 0,66 et un rapport massique L/S de 0,5. La mesure de la Rc à 28 jours est reportée dans le tableau 1.

### Exemple 12

On a répété le mode opératoire de l'exemple 1 mais en utilisant comme matériau aluminosilicaté une argilite provenant de l'est de la France (l'argilite est un matériau aluminosilicaté contenant environ 33% d'argiles TOT chargées (illite/muscovite majoritairement) et 21% de carbonates) ainsi qu'un rapport massique L/S de 1,0. La mesure de la Rc à 28 jours est reportée dans le tableau 1.

### Exemples 13 à 16

On a répété le mode opératoire de l'exemple 3 mais en utilisant respectivement un temps de broyage de 30 min, 1h, 2h et 3h. La mesure de la Rc à 48h est reportée dans le tableau 1.

### Exemple 17

On a répété le mode opératoire de l'exemple 3 mais en utilisant comme matériau de départ de l'illite provenant des carrières d'Arvel (qui comprend 80% en masse d'argile TOT chargée). La mesure de la Rc à 48h est reportée dans le tableau 1.

### Exemple 18

On a répété le mode opératoire de l'exemple 5 mais en utilisant un rapport massique L/S de 0,7 et un rapport massique billes/poudre de matériau de 3,7. La mesure de la Rc à 48h et à 28 jours est reportée dans le tableau 1.

### Exemple 19

On a répété le mode opératoire de l'exemple 5 mais en utilisant un rapport massique L/S de 0,65 et un rapport massique billes/poudre de matériau de 3,7. La mesure de la Rc à 48h et à 28 jours est reportée dans le tableau 1.

### Exemple 20

On a répété le mode opératoire de l'exemple 5 mais en utilisant un rapport massique L/S de 0,6 et un rapport massique billes/poudre de matériau de 3,7. La mesure de la Rc à 48h et à 28 jours est reportée dans le tableau 1.

### Exemple 21

On a répété le mode opératoire de l'exemple 5 mais en utilisant un rapport massique L/S de 0,55 et un rapport massique billes/poudre de matériau de 3,7. La mesure de la Rc à 48h et à 28 jours est reportée dans le tableau 1.

### Exemple 22

On a répété le mode opératoire de l'exemple 6 mais en utilisant un rapport massique L/S de 0,7 et un rapport massique billes/poudre de matériau de 3,7. La mesure de la Rc à 28 jours est reportée dans le tableau 1.

### Exemple 23

On a répété le mode opératoire de l'exemple 6 mais en utilisant un rapport massique L/S de 0,6 et un rapport massique billes/poudre de matériau de 3,7. La mesure de la Rc à 28 jours est reportée dans le tableau 1.

### Exemple 24

On a répété le mode opératoire de l'exemple 6 mais en utilisant un rapport massique L/S de 0,55 et un rapport massique billes/poudre de matériau de 3,7. La mesure de la Rc à 28 jours est reportée dans le tableau 1.

### Exemple 25

On a répété le mode opératoire de l'exemple 6 mais en utilisant un rapport massique L/S de 0,50 et un rapport massique billes/poudre de matériau de 3,7. La mesure de la Rc à 28j est reportée dans le tableau 1.

### Exemple 26

On a répété le mode opératoire de l'exemple 6 mais en utilisant un rapport massique L/S de 0,45 et un rapport massique billes/poudre de matériau de 3,7. La mesure de la Rc à 48h et à 28 jours est reportée dans le tableau 1.

### Exemple 27

On a répété le mode opératoire de l'exemple 6 mais en utilisant un rapport massique L/S de 0,4 et un rapport massique billes/poudre de matériau de 3,7. La mesure de la Rc à 48h et à 28 jours est reportée dans le tableau 1.

### Exemple 28

On a répété le mode opératoire de l'exemple 5 mais en utilisant une solution de silicate de sodium de ratio molaire Na₂O/SiO₂=0.54, un rapport massique L/S de 0,75 et un rapport massique billes/poudre de matériau de 3,7. La mesure de la Rc à 28 jours est reportée dans le tableau 1.

### Exemple 29

On a répété le mode opératoire de l'exemple 28 mais en utilisant rapport massique L/S de 0,7. La mesure de la Rc à 28 jours est reportée dans le tableau 1.

### Exemple 30

On a répété le mode opératoire de l'exemple 28 mais en utilisant rapport massique L/S de 0,6. La mesure de la Rc à 28 jours est reportée dans le tableau 1.

### Exemple 31

On a répété le mode opératoire de l'exemple 28 mais en utilisant rapport massique L/S de 0,55. La mesure de la Rc à 28 jours est reportée dans le tableau 1.

### Exemple 32

On a répété le mode opératoire de l'exemple 28 mais en utilisant rapport massique L/S de 0,5. La mesure de la Rc à 28 jours est reportée dans le tableau 1.

### Exemple 33

On a répété le mode opératoire de l'exemple 28 mais en utilisant rapport massique L/S de 0,45. La mesure de la Rc à 28 jours est reportée dans le tableau 1.

### Exemple 34

On a répété le mode opératoire de l'exemple 28 mais en utilisant rapport massique L/S de 0,4. La mesure de la Rc à 28 jours est reportée dans le tableau 1.

**Tableau 1**

| **Exemple** | **L/S** | **billes/poudre** | **Rc 48h (MPa)** | **Rc 28 j (MPa)** |
|---|---|---|---|---|
| 1 | 0,5 | 7,7 | 79,4 | 101,6 |
| 2 | 0,75 | 7,7 | 65,5 | 70,8 |
| 3 | 1,0 | 7,7 | 51,0 | 55,7 |
| 4 | 1,0 | 7,7 | 24,0 | 26,9 |
| 5 | 0,75 | 7,7 | - | 43,3 |
| 6 | 0,75 | 7,7 | - | 45,9 |
| 7 | 0,69 | 7,7 | 56,6 | 58,1 |
| 8 | 0,5 | 11 | - | 116,8 |
| 9 | 0,5 | 15 | - | 126,1 |
| 10 | 0,75 | 7,7 | - | 73,6 |
| 11 | 0,5 | 7,7 | - | 86,7 |
| 12 | 1,0 | 7,7 | - | 29,1 |
| 13 | 1,0 | 7,7 | 17,0 | - |
| 14 | 1,0 | 7,7 | 36,1 | - |
| 15 | 1,0 | 7,7 | 41,7 | - |
| 16 | 1,0 | 7,7 | 52,4 | - |
| 17 | 1,0 | 7,7 | 62,1 | - |
| 18 | 0,7 | 3,7 | 36,9 | 53,4 |
| 19 | 0,65 | 3,7 | 45,4 | 56,8 |
| 20 | 0,6 | 3,7 | 43,0 | 67,8 |
| 21 | 0,55 | 3,7 | 58,1 | 85,2 |
| 22 | 0.7 | 3.7 | - | 48,9 |
| 23 | 0.6 | 3.7 | - | 67,8 |
| 24 | 0.55 | 3.7 | - | 80,4 |
| 25 | 0.5 | 3.7 | - | 94,9 |
| 26 | 0,45 | 3,7 | 73,2 | 101,2 |
| 27 | 0,4 | 3,7 | 76,5 | 110,9 |
| 28 | 0.75 | 3,7 | - | 12,0 |
| 29 | 0.7 | 3,7 | - | 15,6 |
| 30 | 0.6 | 3,7 | - | 22,7 |
| 31 | 0.55 | 3,7 | - | 31,9 |
| 32 | 0.5 | 3,7 | - | 36,3 |
| 33 | 0.45 | 3,7 | - | 50,3 |
| 34 | 0.45 | 3,7 | - | 60,0 |

On peut noter à la lecture du tableau ci-dessus qu'une diminution du rapport massique L/S permet d'augmenter la Rc à 48h et à 28 jours : dans le cas des exemples 1 à 3, la Rc à 28 jours est augmentée de 82% lorsque le rapport L/S passe de 1,0 à 0,5. Ainsi il est possible de diminuer le coût d'obtention du liant géopolymérique (un rapport L/S plus faible indique une quantité moindre de solution alcaline de silicate) tout en améliorant les propriétés mécaniques de celui-ci.

### Exemple 35

On a répété le mode opératoire de l'exemple 1 mais en utilisant pour l'étape de broyage un broyeur giratoire (broyage pendant 4h à 40 tours/min) ainsi qu'un rapport massique L/S de 0,75. Le liant géopolymérique ainsi obtenu a ensuite été mélangé à du sable de Seine 0/2 mm (rapport massique sable/liant = 3/1) pour obtenir un mortier. On a fabriqué des éprouvettes (4x4x16 cm) à partir de ce mortier ; la résistance à la compression à 28 jours de ces éprouvettes, mesurée selon le principe de la norme EN 196-1, était de 36,3 MPa.

## Revendications

1. Liant géopolymérique comprenant :
- un matériau aluminosilicaté contenant au moins 20% en masse d'argile TOT chargée dont le taux de phase amorphe est d'au moins 20% en masse ;
- une solution alcaline de silicate ayant un rapport molaire M₂O/SiO₂ (M = Na ou K) compris dans la gamme allant de 0,45 à 0,8 ;
ledit liant présente un rapport massique liquide/solide compris dans la gamme allant de 0,4 à 1,0.

2. Liant géopolymérique selon la revendication 1, dans lequel l'argile TOT chargée est choisie parmi les minéraux argileux de type illite, la muscovite, smectite, vermiculite et les mélanges de ces minéraux argileux.

3. Liant géopolymérique selon la revendication 1 ou la revendication 2, dans lequel le matériau aluminosilicaté contient au moins 50% en masse, de préférence au moins 70% en masse, d'argile TOT chargée.

4. Liant géopolymérique selon l'une quelconque des revendications précédentes, dans lequel l'argile TOT chargée présente un taux de phase amorphe d'au moins 50% en masse.

5. Liant géopolymérique selon l'une quelconque des revendications précédentes, dans lequel le matériau aluminosilicaté comprend en outre au moins un composé choisi parmi du quartz, un carbonate, un feldspath, un métakaolin, et un aluminosilicate non activé thermiquement.

6. Liant géopolymérique selon la revendication 5, qui comprend jusqu'à 50% en masse d'un composé choisi parmi un métakaolin, un aluminosilicate non activé thermiquement, et un mélange de métakaolin et d'un aluminosilicate non activé thermiquement.

7. Liant géopolymérique selon l'une quelconque des revendications précédentes, dans lequel la solution alcaline de silicate a un rapport molaire M₂O/SiO₂ compris dans la gamme allant de 0,5 à 0,67.

8. Liant géopolymérique selon l'une quelconque des revendications précédentes, qui présente un rapport massique liquide/solide compris dans la gamme allant de 0,5 à 0,8.

9. Mortier ou béton comprenant le liant géopolymérique selon l'une quelconque des revendications précédentes.

10. Procédé de préparation d'un précurseur de liant géopolymérique, qui comprend le broyage d'un matériau aluminosilicaté contenant au moins 20% en masse d'argile TOT chargée, de granulométrie inférieure à 1mm, de telle sorte que ladite argile TOT chargée présente un taux de phase amorphe d'au moins 20% en masse.

## Patentansprüche

1. Geopolymer-Bindemittel, umfassend:
- ein Aluminosilikatmaterial, das mindestens 20 Massenprozent gefüllten TOT-Ton enthält, dessen Anteil an amorpher Phase mindestens 20 Massenprozent beträgt;
- eine alkalische Silikatlösung mit einem Molverhältnis M₂O/SiO₂ (M = Na oder K) im Bereich von 0,45 bis 0,8;
wobei das Bindemittel ein Flüssigkeits-Feststoff-Massenverhältnis im Bereich von 0,4 bis 1,0 aufweist.

2. Geopolymerbindemittel nach Anspruch 1, wobei der gefüllten TOT-Ton aus Tonmineralien vom Typ Illit, Muskovit, Smektit, Vermiculit und Mischungen dieser Tonmineralien ausgewählt ist.

3. Geopolymerbindemittel nach Anspruch 1 oder Anspruch 2, wobei das Aluminosilikatmaterial mindestens 50 Massenprozent, vorzugsweise mindestens 70 Massenprozent, gefüllten TOT-Ton enthält.

4. Geopolymerbindemittel nach einem der vorstehenden Ansprüche, wobei der gefüllte TOT-Ton einen Anteil an amorpher Phase von mindestens 50 Massenprozent aufweist.

5. Geopolymerbindemittel nach einem der vorstehenden Ansprüche, wobei das Aluminosilikatmaterial ferner mindestens eine Verbindung umfasst, die aus Quarz, einem Karbonat, einem Feldspat, einem Metakaolin und einem nicht thermisch aktivierten Aluminosilikat ausgewählt ist

6. Geopolymerbindemittel nach Anspruch 5, das bis zu 50 Massenprozent einer Verbindung enthält, die aus Metakaolin, einem nicht thermisch aktivierten Aluminosilikat und einer Mischung aus Metakaolin und einem nicht thermisch aktivierten Aluminosilikat ausgewählt ist

7. Geopolymerbindemittel gemäß einem der vorstehenden Ansprüche, wobei die alkalische Silikatlösung ein Molverhältnis M₂O/SiO₂ im Bereich von 0,5 bis 0,67 aufweist

8. Geopolymerbindemittel nach einem der vorstehenden Ansprüche, das ein Flüssigkeits-Feststoff-Massenverhältnis im Bereich von 0,5 bis 0,8 aufweist.

9. Mörtel oder Beton, der das Geopolymerbindemittel nach einem der vorstehenden Ansprüche enthält.

10. Verfahren zur Herstellung eines Vorläufers für ein geopolymeres Bindemittel, das das Mahlen eines Aluminosilikatmaterials umfasst, das mindestens 20 Massenprozent gefüllten TOT-Ton mit einer Korngröße von weniger als 1 mm enthält, derart, dass der gefüllte TOT-Ton einen Anteil an amorpher Phase von mindestens 20 Massenprozent aufweist.

## Claims

1. A geopolymer binder comprising:
- an aluminosilicate material containing at least 20% by mass of charged TOT clay with an amorphous phase content of at least 20% by mass;
- an alkaline silicate solution having a molar ratio M₂O/SiO₂ (M = Na or K) in the range from 0.45 to 0.8;
said binder having a liquid/solid mass ratio in the range from 0.4 to 1.0.

2. The geopolymer binder of claim 1, wherein the charged TOT clay is selected from clay minerals of the muscovite type, smectite type, vermiculite type ans mixtures od fais clay minerals.

3. The geopolymer binder of claim 1 or claim 2, wherein the aluminosilicate material contains at least 50% by mass, preferably at least 70% by mass, of charged TOT clay.

4. The geopolymer binder of any one of the preceding claims, wherein the charged TOT clay has an amorphous phase content of at least 50% by mass.

5. The geopolymer binder of any one of the preceding claims, wherein the aluminosilicate material further comprises at least one compound selected from quartz, a carbonate, a feldspath, a metakaolin, and a non-thermally activated aluminosilicate.

6. The geopolymer binder of claim 5, comprising up to 50% by mass of a compound selected from a metakaolin, a non-thermally activated aluminosilicate, and a mixture of metakaolin and non-thermally activated aluminosilicate.

7. The geopolymer binder of any one of the preceding claims, wherein the alkaline silicate solution has a molar ratio M₂O/SiO₂ in the range from 0.5 to 0.67.

8. The geopolymer binder of any one of the preceding claims, which has a liquid/solid mass ratio in the range from 0.5 to 0.8.

9. A mortar or concrete comprising the geopolymer binder of any one of the preceding claims.

10. A process for preparing a precursor of a geopolymer binder, which comprises grinding an aluminosilicate material containing at least 20% by mass of charged TOT clay and having a particle size less than 1 mm, such that said charged TOT clay has an amorphous phase content of at least 20% by mass.
